# EUROPEAN PATENT APPLICATION

(11) **EP 3 691 078 A1**
(43) Date of publication of application: **05.08.2020**
(21) Application number: 20151977.4
(22) Date of filing: 15.01.2020
(51) Int. Cl.: H02J 7/00, H04W 12/06, H04L 29/06, B60L 53/65, G06F 21/53

(54) **A METHOD FOR CONNECTING A BATTERY POWERED DEVICE TO A SERVER VIA A BATTERY MODULE POWERING THE DEVICE AND RELATED DEVICE**

(30) Priority: 01.02.2019 SE 1950122
(71) Applicant: Sony Corporation, Tokyo 108-0075 (JP)
(72) Inventor: LJUNG, Rickard, 25656 Helsingborg (SE); WEIDERSTRAND, Carl-Johan, 23443 Lomma (SE)
(74) Representative: Aera A/S

(57) **Abstract**

A method is disclosed of connecting a main device to a server via a battery module that powers the main device. The main device may e.g. be a battery powered vehicle or tool. The battery module comprises a battery stack, a processing unit, a memory, a first interface for communicating with a wireless network, and a second interface for establishing a data transfer connection to the main device. The method comprises establishing a wireless network connection to the server by means of the first interface, identifying the battery module to the server using the wireless network connection, establishing a data transfer connection to the main device by means of the second interface, receiving an identifier of the main device using the data transfer connection, and identifying the main device to the server using the wireless network connection. After the connection and authentication has been carried out, the battery module may receive battery supply configuration data and sensor data configuration for the main device from the server.

## Description

The present disclosure pertains to the field of battery powered devices and battery modules that connect the devices to a server for data exchange. More specifically, the present disclosure relates to methods for connecting a battery powered device to a server via a battery module powering the device, related battery modules, and related servers.

### BACKGROUND

Many battery powered devices are being connected to the Internet as part of the movement towards Web 3.0, smart devices, or "internet of things". Depending on the device, the connection ability may be challenging and may affect size and costs of the device. This raises issues, such as how to ensure secure handling of data from the device and secure operation of the device.

### SUMMARY

Accordingly, there is a need for devices and methods for providing a secure connection between a battery powered main device and a server for secure exchange of data.

The present disclosure provides a method, performed at a battery module, of connecting a main device to a server via a battery module for powering the main device, the battery module comprising a processing unit, a memory, a first interface for communicating with a wireless network, and a second interface for establishing a data transfer connection to the main device, the method comprising establishing a wireless network connection to the server by means of the first interface; identifying the battery module to the server using the wireless network connection; establishing a data transfer connection to the main device by means of the second interface; receiving an identifier of the main device using the data transfer connection; and identifying the main device to the server using the wireless network connection.

Also, a corresponding battery module for powering a main device is provided, comprising a battery pack for storing electrical energy and having a contact for supplying power to the main device; a processing unit comprising a memory; a first interface for communicating with a wireless network; and a second interface for establishing a data transfer connection to the main device; wherein the processing unit is configured to perform the above method to be performed at a battery module.

The present disclosure provides a computer readable storage medium storing one or more programs, the one or more programs comprising instructions, which when executed by a battery module comprising a processing unit cause the battery module to perform any of the methods disclosed herein.

Further, the present disclosure provides a method, performed by a server, of managing data related to a main device and a battery module for powering the main device, the server comprising a memory holding battery supply configuration data and sensor data configuration associated with battery module and/or the main device and configured to connect to the battery module via a wireless network, the method comprising establishing a wireless network connection to the battery module; receiving an identifier of the battery module using the wireless network connection; receiving an identifier of the main device to be powered by the battery module using the wireless network connection; and transmitting the battery supply configuration data for the main device and/or the sensor data configuration associated with battery module and/or the main device to the battery module using the wireless network connection.

Also, a server comprising a processing unit, a memory, an interface unit configured to connect to a wireless network is provided, wherein the server is configured to perform the above method to be performed by a server.

The present disclosure provides a computer readable storage medium storing one or more programs, the one or more programs comprising instructions, which when executed by a server comprising a processing unit cause the server to perform any of the methods disclosed herein.

It is an advantage of the present disclosure that the connectivity functionality or means for forming a wireless connection is placed in the battery module. This allows using one battery module to provide secure connectivity for many different main devices. This approach also provides shorter development time for developers of main devices since they need not worry about connectivity. With such cloud connected battery solution, the expensive electronics for establishing connectivity are included in the battery module, which can lower the price and complexity of the main device.

### BRIEF DESCRIPTION OF THE DRAWINGS

The above and other features and advantages of the present disclosure will become readily apparent to those skilled in the art by the following detailed description of some embodiments thereof with reference to the attached drawings, in which:
Fig. 1 shows a battery unit for supplying power to different main devices, here exemplified by a power drill and an electric scooter, and for connecting the main device to a server according to some embodiments of this disclosure. A mobile telephone accessing the server is also shown as an optional feature.
Fig. 2 is a diagram illustrating a system according to some embodiments of this disclosure, comprising a battery module, a main device and a server.
Figs. 3-5 are flow-charts illustrating methods according to some embodiments of this disclosure, performed at a battery module, of connecting a main device to a server via a battery module for powering the main device.
Fig. 6 is a flow-chart illustrating methods according to some embodiments of this disclosure, performed at a server, of managing data related to a main device and a battery module for powering the main device.

### DETAILED DESCRIPTION

Various embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the invention or as a limitation on the scope of the invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly d escri bed.

The figures are schematic and simplified for clarity, and they merely show details which may aid the understanding of the invention, while other details have been left out. Throughout, the same reference numerals are used for identical or corresponding parts.

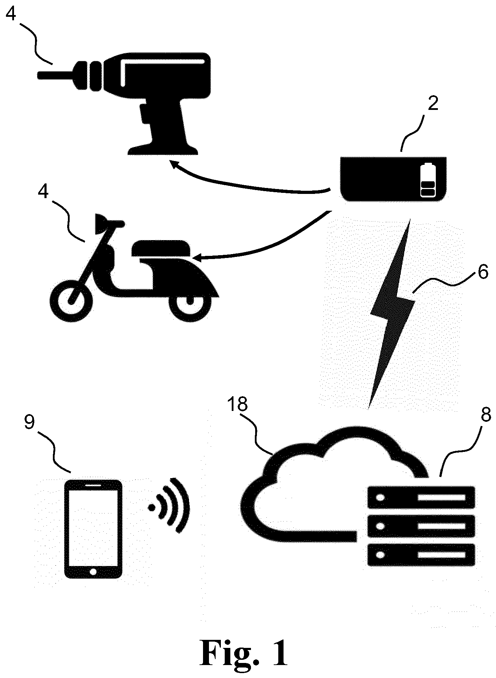

Fig. 1 shows an example battery unit 2 configured to supply power to different main devices 4, e.g. a power drill and an electric scooter. The battery unit 2 is configured to connect the main device 4 to a server 8 via a wireless network connection 6 and a wireless network 18. A mobile telephone 9 capable of accessing the server 8 is also shown as an optional feature. The disclosure can be applied to a large variety of battery powered main devices such as, but not limited to bicycles, scooters, cars and other vehicles, drones, smart metering systems, portable cameras, garden machines, power tools such as drivers, drills, saws, grinders, sanding machines, milling machines etc.

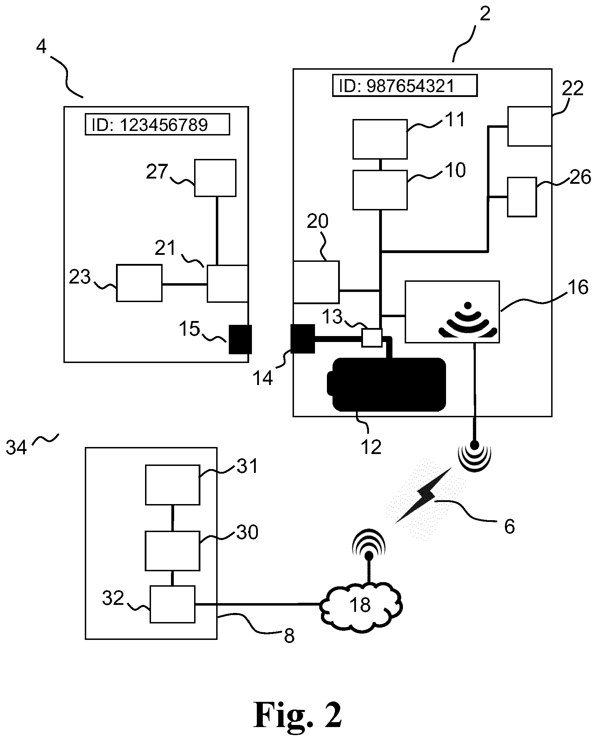

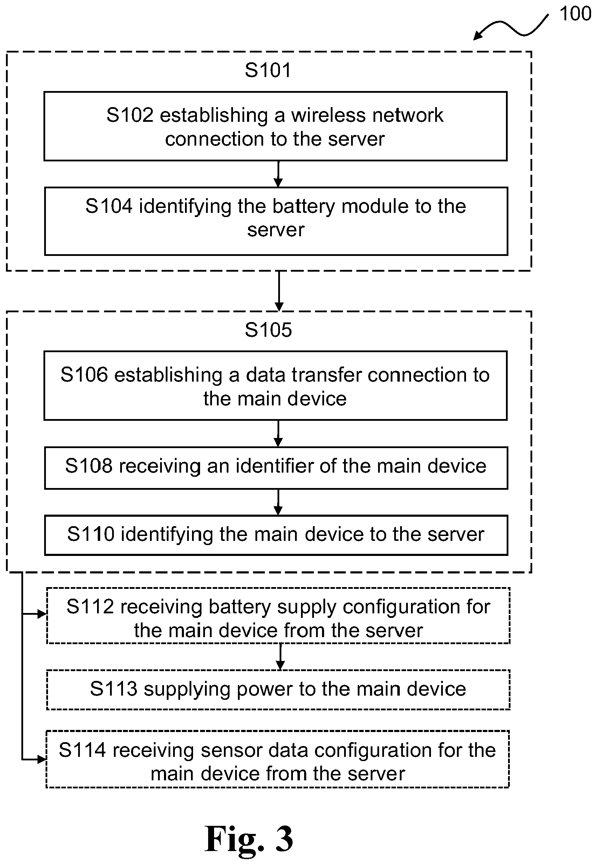

Fig. 2 shows a block diagram of an example battery module 2 according to the disclosure. The battery module 2 comprises a processing unit 10 and a memory 11. The battery module 2 may be configured to perform any of the methods disclosed herein (e.g. methods disclosed in Fig. 3). The operations of the battery module 2 may be embodied in the form of executable logic routines (e.g., lines of code, software programs, etc.) that are stored on a non-transitory computer readable medium (e.g., the memory 11) and are executed by the processing unit 10.

Furthermore, the operations of the battery module 2 may be considered a method that the battery module is configured to carry out. Also, while the described functions and operations may be implemented in software, such functionality may as well be carried out via dedicated hardware or firmware, or some combination of hardware, firmware and/or software.

The memory 11 may be one or more of a buffer, a flash memory, a hard drive, a removable media, a volatile memory, a non-volatile memory, a random access memory (RAM), or other suitable device. In a typical arrangement, the memory 11 may include a non-volatile memory for long term data storage and a volatile memory that functions as system memory for the processing unit 10. The memory 11 may exchange data with the processing unit 10 over a data bus. Control lines and an address bus between the memory 11 and the processing unit 10 also may be present. The memory 11 is considered a non-transitory computer readable medium.

The battery module 2 further comprises a battery pack 12 for storing electrical energy and having a contact 14 for supplying power (electrical energy) to the main device. The battery pack 12 can have different capacities depending on the type of main devices it is intended to be used with. The contact 14 for supplying power to the main device is positioned so that electrical connection to the main device 4 is established when the battery module is inserted into or connected to the main device. The battery module 2 may comprise a power supply controller 13 at a line between the battery pack 12 and contact 14. The power supply controller is connected to the processing unit 10, allowing the processing unit to control the power supply from the battery pack 12 to the main device 4. The battery pack may be rechargeable and the battery module may have a socket or similar for connecting the battery pack to an external charge reservoir, e.g. via a charging station or a charge cable. The socket may be provided by the contact for supplying power to the main device.

The battery module 2 further comprises a first interface 16 for communicating with the wireless network 18. The wireless network 18 could be a WLAN or a wireless communications system such as a cellular system or network (e.g. Narrowband IoT, e.g. low cost Narrowband IoT or category M). The first interface 16 for communicating with the wireless network 18 may comprise an applet which is configured to enable connectivity to the server 8. In one or more embodiments, the first interface 16 may be a modem that communicates with a cellular network. The battery module 2 may further comprise an access circuit connected to the modem that carries out cellular network authentication and access. When the wireless network connection 6 to the server 8 is established, the battery module 2 is said to be online, and when there is no wireless network connection to the server 8, the battery module 2 is said to be offline.

The battery module 2 further comprises a second interface 20 for establishing a data transfer connection to the main device 4. Multiple protocols and standards exist for the communication between the battery module 2 and the main device 4. Any communication link is possible, e.g. a serial interface for industry such as Inter-Integrated Circuit (I²C), Serial Peripheral Interface (SPI) or Universal Serial Bus (USB) or any other. Contactless interfaces are also possible, such as Bluetooth or RFID (for identification only) which may be advantageous for main devices operating in wet, dusty, or otherwise exposed environments. Standardization is initiated to enable sharing of battery pack status etc., which could be gathered within the battery module as well, se e.g. www.batterystandards.info.

The battery module 2 is configured to establish, via the first interface 16, a wireless network connection 6 to the server 8 ; to identify, via the wireless network connection 6, the battery module 2 to the server 8; to establish, via the second interface 20, a data transfer connection to the main device 2; to receive, via the data transfer connection 20, an identifier of the main device 2; and to identify, via the wireless network connection 6, the main device 2 to the server 8.

The main device 4 may comprise a contact 15 for engaging contact 14 to receive power from the battery pack 12, and a third interface 21 for establishing a data transfer connection to the second interface 20 of the battery module 2.

The battery module 2 may comprises one or more sensors 22. The main device 4 may also comprises one or more sensors 22. Since the battery module 2 can be used to supply power to a large variety of main devices 2, many different sensors may be relevant. In some embodiments, one or more of the following sensors may be comprised by the battery module 2 and/or the main device 4: geographic position sensor, acceleration sensor, pressure, temperature sensor, humidity sensor, voltage sensor, electrical current sensor, fingerprint sensor, iris sensor, RFID sensor, angular velocity sensor, light sensor, IR sensor, and torque sensor.

In order to identify the battery module 2 and the main device 4, each comprise an identifier (ID) such as a serial number. To enable secure authentication of the battery module 2 and main device 4, each may comprise a secure element, 26 and 27 respectively, which comprise the identifier.

The disclosure also provides the server 8 comprises a processing unit 30, a memory 31, and an interface unit 32 configured to connect to the wireless network, wherein the server is configured to perform the method described herein (e.g. methods disclosed in Fig. 3). The operations of the server 8 may be embodied in the form of executable logic routines (e.g., lines of code, software programs, etc.) that are stored on a non-transitory computer readable medium (e.g., the memory 31) and are executed by the processing unit 30.

The server 8 is configured to establish, for example via the interface unit 32, a wireless network connection 6 to the battery module 2; to receive, via the wireless network connection 6, an identifier of the battery module 2; to receive, via the wireless network connection 6, an identifier of the main device 4 to be powered by the battery module 2; and to transmit battery, via the wireless network connection 6, supply configuration data for the main device 4 and/or the sensor data configuration associated with battery module 2 and/or the main device 4 to the battery module.

The disclosure further provides a system 34 comprising the battery module 2, the main device 4 and the server 8.

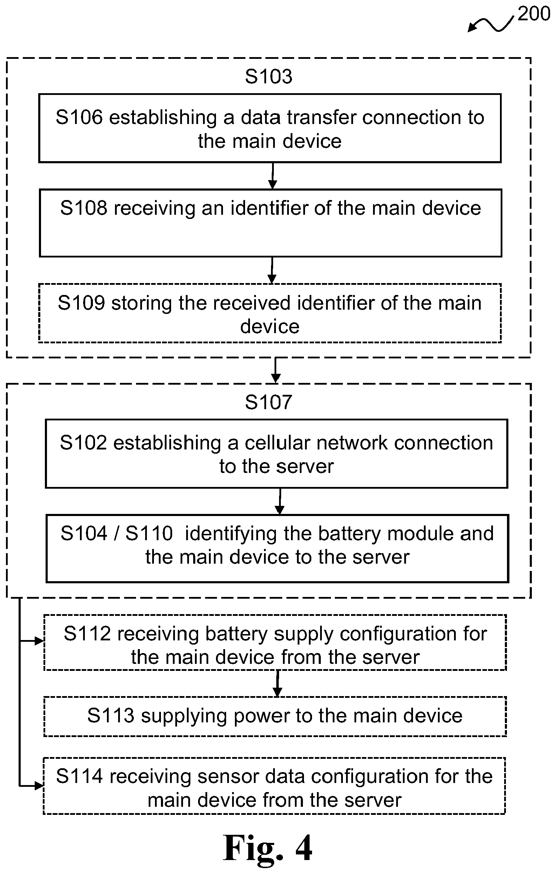

The disclosure provides a method performed at the battery module 2, of connecting the main device 4 to the server 8 via the battery module, and a method performed at the server 8. The methods are described in the following with reference to Figs. 3 and 4, respectively.

Fig. 3 shows a flow-chart illustrating an example method 100 where the battery module 2, in step S101, sets up communication with the server 8. Method 100 comprises establishing, S102, the wireless network connection 6 to the server by means of the first interface 16 for communicating with a wireless network.

Method 100 comprises identifying, S103, the battery module to the server using the wireless network connection. For example, the battery module 2 identifies, S103, itself to the server 8 using the wireless network connection 6.

In step S105, the battery module 2 sets up communication to the main device 4. Method 100 comprises establishing, S106, a data transfer connection to the main device 4 by means of a second interface 20 (e.g. for establishing a data transfer connection to the main device 4), and receiving, S108, an identifier of the main device 4 using the data transfer connection.

Method 100 comprises identifying S110 the main device to the server using the wireless network connection. For example, the battery module 2 identifies, S110, the main device 4 to the server 8 using the wireless network connection 6 (e.g. to complete the connection between the main device 4 and the server 8). The main device 4 is now connected to the server 8 via the battery module 2, and secure transfer of data can be carried out.

Steps S101 and S105 may be carried out simultaneously, immediately after one another, or with a time in between. For example, step S101 of setting up the wireless network connection 6 with the server 8 may be performed separately by the user pressing a button on the battery module 2 even before the battery module 2 is attached to the main device 4 or before the main device 4 is turned on. Then, at a later stage, when the battery module 2 has been attached to the main device or when the main device 4 is turned on, step S105 is performed to set up communication between the battery module 2, the main device 4, and the server 8. This is advantageous as it may save time when starting the main device since the wireless network connection 6 has already been established.

In one or more embodiments, shown in Figs. 3 and 4, the method further comprises step S112 of receiving, by the battery module 2, battery supply configuration data for the main device 4 from the server 8. The battery supply configuration data enables managing e.g. certain periods of time where the main device is allowed or not allowed to operate, i.e. to receive power from the battery module. The battery supply configuration data may also use geographic position data from the battery module or the main device to manage certain geographic regions where the main device is allowed or not allowed to operate. For, for example, an electrically powered vehicle this may be used as theft-protection or to set a perimeter of operation. Also, in some embodiments, the battery supply configuration data may contain instructions setting maximum voltage and/or current levels, to ensure that optimum power supply is used for the type of main device the battery module is attached to. The battery supply configuration data may be updated at any later time to accommodate for a current state of the battery module and main device. In some embodiments, battery supply configuration data may contain instructions to conserve remaining stored energy or limit main device functionality. For example, if the remaining battery power is low, battery supply configuration data could contain instructions configuring the functionality of the main device, such as limiting maximum output or avoiding certain operations.

In one or more embodiments, shown in Figs. 3 and 4, the method comprises step S114 of receiving, by the battery module 2, sensor data configuration for the main device 4 from the server 8. The sensor data configuration instructs the battery module on how to manage sensor data from its own sensors and from sensors of the main device, if available. The managing of sensor data may comprise which sensor data to collect, how often to collect the sensor data, and how often to transmit the sensor data to the server. The sensor data configuration may be specific to main device as well as to the battery module. For example, the sensor data configuration may let the battery module know from how many sensors of the main device it should expect to receive data and what to do with data from each sensor. For example, some sensor data could be stored in the battery module for later transmission to the server - this could for example apply to sensor data used for statistics. Other sensor data may be required to be forwarded to the server continuously or when certain conditions are met. This could for example apply to geographical position data or sensor data indicating an alarm.

Fig. 4 shows a flow-chart illustrating a method 200 performed by the battery module in accordance with other embodiments of this disclosure. Method 200 may be seen as an alternative embodiment involving the same steps as the one or more embodiments of Fig. 3, but in a different order. Here the battery module 2, in step S103, sets up communication to the main device 4. This involves the steps S106 and S108 described in relation to Fig. 3. Thereafter, in step S107, the battery module 2 sets up communication with the server 8, S102, and identifies the battery module 2 and the main device 4 to the server, corresponding to steps S104 and S110 described in relation to Fig. 3. The main device 4 is now connected to the server 8 via the battery module 2, and secure transfer of data can be carried out.

Steps S103 and S107 may be carried out simultaneously, immediately after one another, or with a time in between. For example, step S103 of setting up communication between the battery module 2, the main device 4 may be performed separately as soon as the battery module 2 has been attached to the main device 4, also without turning the main device 4 on. In step S109, the main device may store the received identifier of the main device 4. Then, at a later stage, when the main device is turned, the wireless network connection 6 with the server 8 is established and identifiers are exchanged in step S107. Again, this can be advantageous as it may save time when starting the main device 4 since one of the required connections has already been established.

The battery module 2 may comprise the secure entity 26 so that steps S102 and S104 of establishing wireless network connection 6 and identifying the battery module 2 to the server 8 may comprise performing a secure authentication using the secure entity 26 of the battery module 2. The secure entity 26 of battery module 2 may comprise a secure element hardware or software, such as TrustZone technology, in the battery module that enables secure identification of the battery module 2 towards the server 8. The secure entity 26 of battery module may comprise an applet which is configured to enable the secure authentication to establish a secure connection to the server 8 on the wireless network connection 6. The secure connection can be enabled in several ways e.g. via both radio level security as available in e.g. 3rd Generation Partnership Project (3GPP) network such as Long-Term Evolution (LTE) and application level security as with Transport Layer Security (TLS).

Similarly, the main device 4 may comprise the secure entity 27 so that steps S106 and S108 of establishing the data transfer connection and receiving an identifier of the main device 4 comprises performing a secure authentication using the secure entity 27 of the main device 4. The secure entity 27 of the main device may e.g. be a secure element hardware or TrustZone technology in the battery module and/or the main device that enables secure identification of the main device 4 towards the battery module 2. It also enables additional secure applications such as e.g. Near-field Communication (NFC) based local access rights control, e.g. to manage who can use the main device and where.

When the battery supply configuration data has been received, the method may comprise configuring the battery module 2 according to the received battery supply configuration data for the main device 4. Further, the method 100, 200 may comprise supplying S113, by the battery module 2, power to the main device 4 according to the received battery supply configuration data to operate the main device 4. For this purpose, referring to Fig. 2, the processing unit 10 may use the power supply controller 13 to regulate power supply from the battery pack 12 to the main device 4 via contacts 14 and 15.

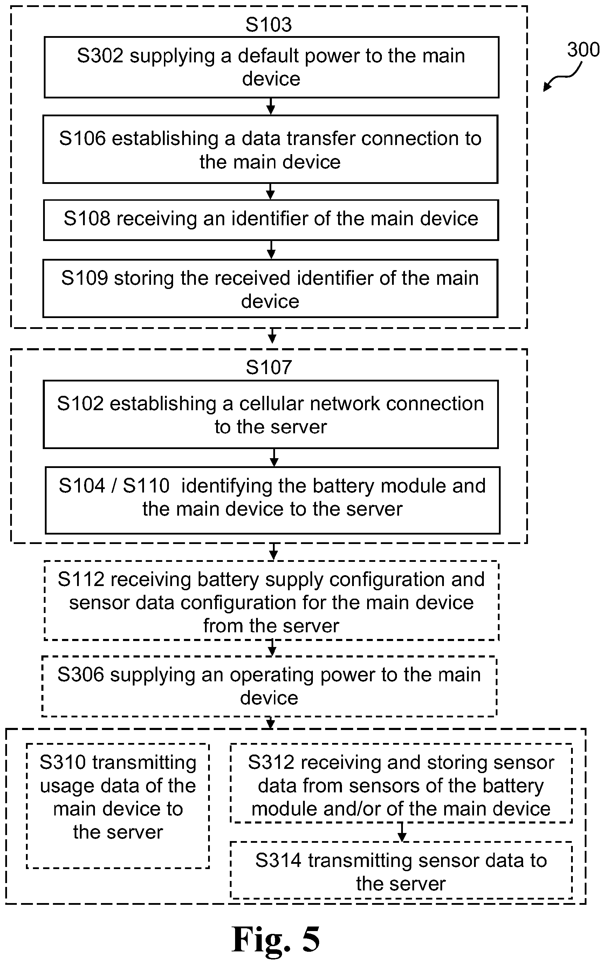

Third interface 21 may be passive, such as an RFID tag, or active involving a microprocessor requiring electric power to operate. In one or more embodiments, the main device needs power in order for the data transfer connection to be established. For this purpose, the disclosure provides an example method 300 illustrated in flow chart of Fig. 5, providing extra/intermediate steps to the flow chart 200 of Fig. 4. Here, the method 300 comprise supplying, S302, upon attachment of the battery module 2 to the main device 4 and/or upon start-up of the main device 4, power to the main device 4 according to a default battery supply configuration to establish, S106, the data transfer connection and receive, S108, an identifier of the main device 4; and supplying, S306, after receiving battery supply configuration data for the main device 4, power to the main device 4 according to the received battery supply configuration data to operate the main device 4.

The one or more sensors 22, 23 of the battery module 2 and the main device 4 may generate sensor data when the main device is operating or turned on. In one or more embodiments, geographical positioning sensor (e.g. GPS) of the main device may be enabled continuously or at regular intervals in order to locate the battery pack/main device if it goes missing or is stolen. In some embodiments the method 300 comprises transmitting, step S314 in Fig. 5, generated sensor data from the one or more sensors 22, 23 of the battery module 2 and/or of the main device 4 to the server 8 when the wireless network connection 6 is established. In some embodiments, the battery module 2 is generally configured to forward sensor data to the server 8. However, the received sensor data configuration may instruct the battery module 2 to temporary store or buffer sensor data. An advantage is mainly to reduce transmission on the wireless network connection 6, but also to handle disruptions when the main device 4 is used in areas with poor wireless coverage. Thus, in one or more embodiments, the method comprises receiving and storing sensor data from the one or more sensors 22, 23 of the battery module 2 and/or of the main device 4 prior to transmitting the sensor data to the server 8, step S312 in Fig. 5.

In one or more embodiments, the method 300 comprises transmitting S310, by the battery module 2, usage data of the main device 4 to the server 8. Usage data may comprise power usage of the main device 4, such as total charge supplied to the main device 4 (typically measured in Ampere hours, Ah), power supplied to the main device 4 as a function of time, peak power drawn from the main device 4, etc. Usage data may also comprise sensor data from sensors 22, 23 of the battery module 2 and/or of the main device 4.

In one or more embodiments, at least partial functionality of the main device 4 is enabled when the battery module 2 is offline. This may be implemented by exchanging offline power tokens between the battery module 2 and the main device 4. This may support guaranteeing continuous operation of the main device 4 even in areas with bad coverage. When coverage is resumed, new tokens are filled up in the battery unit. Hence, according to one or more embodiments of the method performed in the battery modules, when no wireless network connection to the server can be established, the method comprises performing an offline mode operation of the battery module. The offline mode operation may comprise: determining if an offline power token is stored in the memory; if an offline power token is stored in the memory, then supplying power to the main device to operate the main device; and if no offline power token is stored in the memory, then supplying no power to the main device. An offline power token is data representing a limited power supply to the main device, such as limited to a certain amount of time, a certain amount of charge (Ah), a certain number of uses (i.e. turning on/off) of the main device, a certain extend of use of the main device (e.g. based on sensor data), or similar.

When the wireless network connection 6 to the server 8 is established, the method performed by the battery module may comprise replenishing offline power tokens in the memory 11 of the battery module 2 up to a predetermined amount. A limited number of offline power tokens are stored in the memory 11 of the battery module 2, so that there is a limit to how long or how many times the main device 4 can be operated with the battery module 2 being offline. When connected to the server 8, the replenishing of offline power tokens may be triggered by the battery module 2 as a result of one or more offline power tokens having been used since it was last online, or there may be a standard check or inquiry after each establishment of the wireless network connection 6.

The predetermined amount of offline power tokens stored in the memory 11 may be a standard amount common for all main devices. In one or more embodiments, the predetermined amount may be specified by the battery supply configuration data for the main device 4 and thereby be specific to the typical operation of the main device 4. For example, the predetermined amount may correspond to typical operation of the main device 4 within one working day, and the predetermined amount may allow operation of the main device 4 for a limited to an amount of time, for example 10 hours. This may be relevant for main devices that are often used at one location for longer periods, such as power tools operating in construction sites where there are often poor connectivity. At the end of the working day, the tool may be taken out of the construction site, allowing for establishing a server connection and replenishing the amount of tokens. In another case, the offline power tokens could instruct the processing unit 10 to use sensor data to limit the operation to the main device 4. The predetermined amount could for example be a geographic region extending from the position where the battery module 2 was last online or just a distance that can be travelled before operation is terminated. This may be relevant for main devices that are vehicles such as electric bicycles or scooters.

The present disclosure further provides a method, performed by the server (e.g. the server disclosed herein, e.g. server 8 of Fig. 1), of managing data related to the main device 4 and the battery module 2. The server 8 comprises the memory 31 holding battery supply configuration data and sensor data configuration associated with battery module 2 and/or the main device 4 and configured to connect to the battery module 8 via a wireless network 18.

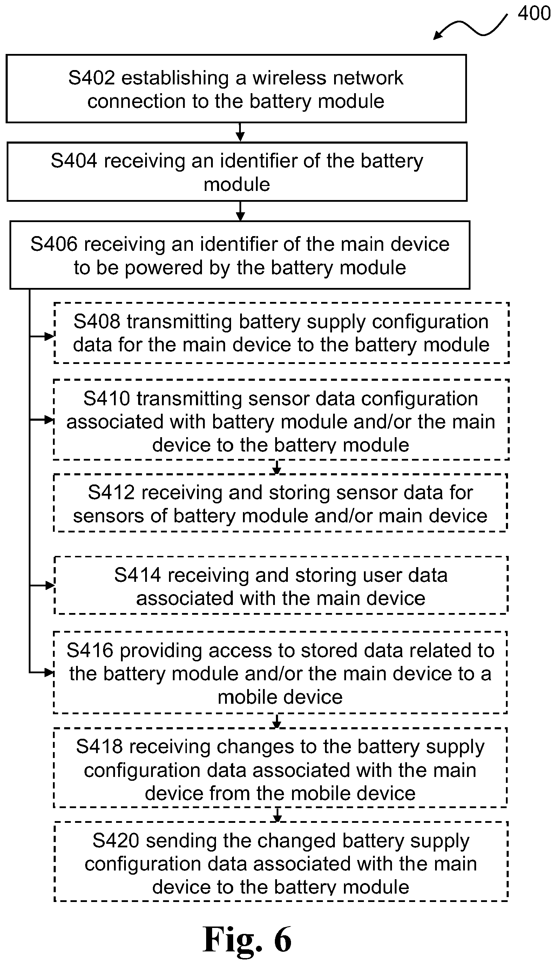

Fig.6 shows a flow-chart illustrating a method 400 performed by the server.

The method 400 comprises establishing S402 a wireless network connection 6 to the battery module 2; receiving S404 an identifier of the battery module 2 using the wireless network connection 6; and receiving S406 an identifier of the main device 4 to be powered by the battery module using the wireless network connection 6.

Referring to Figs 1 and 2, this sets up the wireless network connection 6 and authenticate the battery module 2 and the main device 4.

Method 400 comprises transmitting S408 the battery supply configuration data for the main device to the battery module using the wireless network connection. For example, the server 8 may now transmit S408 the battery supply configuration data for the main device 4 to the battery module 2 using the wireless network connection 6.

Method 400 comprises transmitting S410 sensor data configuration associated with battery module 2 and/or the main device 4 to the battery module 2 using the wireless network connection 6. For example, the server 8 may transmit S410 the sensor data configuration associated with battery module 2 and/or the main device 4 to the battery module 2 using the wireless network connection 6.

As mentioned previously, the main device 4 may have battery supply configuration data and/or the sensor data configuration associated therewith that is specially customized for the operation of the main device 4. The server 8 is configured to hold battery supply configuration data and/or the sensor data configurations for several main devices of the same type and several different types of main devices. Similarly, different battery modules may exist, such as modules having different charge capacities, sensors, etc., and capabilities to power different main devices. Hence, different battery modules may have different battery supply configuration data and/or the sensor data configuration associated therewith for the operation of the same main device. Therefore, for a given main device 4, the battery module identifier may be required to select the appropriate battery supply configuration data and/or the sensor data configuration. For these reasons, the method may comprise selecting or determining, based on the identifier of the battery module 2 and/or the main device 4, the battery supply configuration data and/or the sensor data configuration to be transmitted to the battery module 2.

When the main device 4 is in operation, the battery module 2 can transmit sensor data and user data, see S310 and S314 in Fig. 5. Upon receiving such data, the server 8 may store this data in relation to the previously received identifiers of the battery module 2 and main device 4, so that it can be retrieved using one of these identifiers.

Hence, the method 400 performed by the server 8 may comprise S412 receiving sensor data for one or more sensors 22, 23 of the battery module 2 and/or of the main device 4 using the wireless network connection 6 and storing the received sensor data in the memory 31. Similarly, the method may comprise S414 receiving usage data associated with the main device 4 using the wireless network connection 6 and storing the received usage data in the memory 31.

In one or more embodiments, the method 400 includes providing access to remote monitoring of the battery module 2 and/or main device 4 in an application with an adaptive user interface (UI), displayed in a mobile device 9 (see Fig. 1), e.g. within a computer or smartphone. A mobile device 9 is equipped with an application for monitoring and control of a battery module and/or a main device. The mobile device can connect to the server 9, and the application information. For example, the user interface in the mobile device application may be adjusted according to the combination of battery module and main device and the corresponding type of data available from the server. The method 400 performed by the server 8 may comprise S416 providing access to stored data related to the battery module 2 and/or the main device 4 to a mobile device 9 via the wireless network 18.

Fig. 1 shows the mobile device 9 as a smartphone, but this is only an example of a mobile device. The application on the mobile device 9 can be mapped to one or more battery module and main device identities. A mapping could mean a registration to the server 8, identifying the mobile device 9 and authenticating its rights to collect server data related to one or more battery modules and main device identifiers. An identifier comprises a serial number and/or other unique identifier which may be verified via certificate handling, and the application can be identified by e.g. a user ID or a mobile device ID or a subscription ID. For each registered battery module and/or main device identifier, the application is authorized to connect to the server and receive data related to the identifier of the registered battery module or main device.

The application in the mobile device 9 can run in different modes, adapting the user interface accordingly. The modes of operation in the application may e.g. be:
- Battery monitoring mode: The application gathers data from the server related to one or more battery module identifiers. The application UI provides battery status, e.g. charging status/level and whether the battery module is connected to any main device and if so what type of device.
- Main device monitoring mode: The application gathers data from the server related to one or more main device identifiers. The application UI provides main device status and sensor data available related to the main device.
- Combination monitoring mode: The application gathers data from the server related to one or more battery module identifiers, and to the main device connected to each of the one or more battery modules. The application receives data from a pair (battery module + main device) and the UI presents which type of main device is connected and adapts its UI to present relevant status and sensor data available from the server. E.g. in case the battery is connected to a drilling power tool, the UI shows for example the type of drill connected, and sensor data related to the usage of the drill. Also, battery status information is shown, e.g. charging status. In case the battery module is not connected to any main device, the application UI shows the battery status only.

In case multiple battery modules or main devices are registered in the application, a selection can be made to show individual data from each registered entity. For example, an application could be mapped to ten different battery modules, and the application can be configured to show summary status of all ten registered battery modules, or to show individual details of each battery module. Further, if running the application in combination mode, selecting a certain battery which is connected to a main device will enable the application to gather status for the specific device connected to the particular battery and adapt the UI to show the device type and relevant status/sensor data for the main device connected to the battery.

In one or more embodiments, the mobile device may be used to change the operation of the battery module 2 or main device 4. The method 400 performed by the server 8 may comprise receiving S418 changes to the battery supply configuration data associated with the main device 4 from the mobile device 9; and sending S420 the changed battery supply configuration data associated with the main device 4 to the battery module 2 using the wireless network connection 6. Hence, a user of the mobile device may change the battery supply configuration data to loosen or tighten limitations on the operation of the main device 4. For example, the user may allow operation of the main device 4 outside regions or hours that were previously prohibited or shut down operation of the main device 4 if it has been stolen or malfunction has been detected.

Embodiments of methods and products (battery module, server, or system) according to the disclosure are set out in the following items:
1. A method, performed at a battery module, of connecting a main device (4) to a server (8) via a battery module (2) for powering the main device (4), the battery module (2) comprising a processing unit (10), a memory (11), a first interface (16) for communicating with a wireless network (18), and a second interface (20) for establishing a data transfer connection to the main device (4), the method comprising:
   establishing a wireless network connection (6) to the server (8) by means of the first interface (16);
   identifying the battery module (2) to the server (8) using the wireless network connection (6);
   establishing a data transfer connection to the main device (4) by means of the second interface (20);
   receiving an identifier of the main device (4) using the data transfer connection; and
   identifying the main device (4) to the server (8) using the wireless network connection (6).
2. The method of item 1, comprising receiving battery supply configuration data for the main device (4) from the server (8).
3. The method of any of preceding items, comprising receiving sensor data configuration for the main device (4) from the server (8).
4. The method according to item 1, wherein the battery module (2) further comprises a secure entity (26) and wherein identifying the battery module (2) to the server (8) comprises performing a secure authentication using the secure entity (26) of the battery module (2).
5. The method according to any of the preceding items, wherein the main device (4) comprises a secure entity (27) and wherein receiving an identifier of the main device (4) comprises performing a secure authentication using the secure entity (27) of the main device (4).
6. The method according to item 2, comprising supplying, by the battery module (2), power to the main device (4) according to the received battery supply configuration data to operate the main device (4).
7. The method according to any of items 2 or 6, comprising:
   supplying, by the battery module (2) and upon attachment of the battery module (2) to the main device (4) and/or upon start-up of the main device (4), power to the main device (4) according to a default battery supply configuration to establish the data transfer connection and to receive an identifier of the main device (4); and
   supplying, by the battery module (2) and after receiving battery supply configuration data for the main device (4), power to the main device (4) according to the received battery supply configuration data to operate the main device (4).
8. The method according to item 3, comprising transmitting sensor data from one or more sensors (22) of the battery module (2) and/or one or more sensors (23) of the main device (4) to the server (8)
9. The method according to item 8, comprising receiving and storing sensor data from the one or more sensors (22) of the battery module (2) and/or one or more sensors (23) of the main device (4) prior to transmitting the sensor data to the server (8).
10. The method according to any of the preceding items, comprising transmitting usage data of the main device (4) to the server (8).
11. The method according to any of the preceding items wherein, when no wireless network connection (6) to the server (8) can be established, an offline mode operation of the battery module (2) comprises:
   determining if an offline power token is stored in the memory (11);
   if an offline power token is stored in the memory (11), then supplying power to the main device (4) to operate the main device (4); and
   if no offline power token is stored in the memory (11), then supplying no power to the main device (4).
12. The method according to item 11, comprising, when the wireless network connection (6) to the server (8) is established, replenishing offline power tokens in the memory (11) of the battery module (2) up to a predetermined amount.
13. A method, performed by a server (8), of managing data related to a main device (4) and a battery module (2) for powering the main device (4), the server (8) comprising a memory (31) holding battery supply configuration data and sensor data configuration associated with battery module (2) and/or the main device (4) and configured to connect to the battery module (2) via a wireless network (18), the method comprising:
   establishing a wireless network connection (6) to the battery module (2);
   receiving an identifier of the battery module (2) using the wireless network connection (6);
   receiving an identifier of the main device (4) to be powered by the battery module (2) using the wireless network connection (6); and
   transmitting the battery supply configuration data for the main device (4) and/or the sensor data configuration associated with battery module (2) and/or the main device (4) to the battery module (2) using the wireless network connection (6).
14. The method according to item 13, comprising receiving sensor data for one or more sensors (22) of the battery module (2) and/or one or more sensors (23) of the main device (4) using the wireless network connection (6) and storing the received sensor data in the memory (31).
15. The method according to item 13 or 14, comprising receiving usage data associated with the main device (4) using the wireless network connection (6) and storing the received usage data in the memory (31).
16. The method according to any of items 13-15, comprising providing access to stored data related to the battery module (2) and/or the main device (4) to a mobile device (9) via the wireless network (18).
17. The method according to item 16, comprising:
   receiving changes to the battery supply configuration data associated with the main device (4) from the mobile device (9); and
   sending the changed battery supply configuration data associated with the main device (4) to the battery module (2) using the wireless network connection (6).
18. A battery module (2) for powering a main device (4), comprising
   a battery pack (12) for storing electrical energy and having a contact (14) for supplying power to the main device (4);
   a processing unit (10) and a memory (11);
   a first interface (16) for communicating with a wireless network (18); and
   a second interface (20) for establishing a data transfer connection to the main device (4);
   wherein the processing unit (10) is configured to perform any of the methods according to any of items 1-12.
19. The battery module (2) according to item 18, comprising one or more of the following sensors: geographic position sensor, acceleration sensor, pressure, temperature sensor, humidity sensor, voltage sensor, electrical current sensor, fingerprint sensor, iris sensor, RFID sensor, light sensor, IR sensor, angular velocity sensor, and torque sensor.
20. A server (8) comprising a processing unit (30), a memory (31), an interface unit (32) configured to connect to a wireless network (18), wherein the server (8) is configured to perform any of the methods according to any of items 13-17.
21. A system (34) comprising:
   the battery module (2) according to item 18 or 19;
   a main device (4) comprising a contact (15) for receiving power from the battery pack (12) and a third interface (21) for establishing a data transfer connection to the battery module (2); and
   the server (8) according to item 20.

The use of the terms "first", "second", "third" and "fourth", "primary", "secondary", "tertiary" etc. does not imply any particular order but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering. Furthermore, the labelling of a first element does not imply the presence of a second element and vice versa.

It may be appreciated that Figs. 1-6 comprises some modules or operations which are illustrated with a solid line and some modules or operations which are illustrated with a dashed line. The modules or operations which are comprised in a solid line are modules or operations which are comprised in the broadest example embodiment. The modules or operations which are comprised in a dashed line are example embodiments which may be comprised in, or a part of, or are further modules or operations which may be taken in addition to the modules or operations of the solid line example embodiments. It should be appreciated that these operations need not be performed in order presented. Furthermore, it should be appreciated that not all of the operations need to be performed. The operations may be performed in any order and in any combination.

It is to be noted that the word "comprising" does not necessarily exclude the presence of other elements or steps than those listed. It is to be noted that the words "a" or "an" preceding an element do not exclude the presence of a plurality of such elements.

It should further be noted that any reference signs do not limit the scope of the claims, that the described example embodiments may be implemented at least in part by means of both hardware and software, and that several "means", "units" or "devices" may be represented by the same item of hardware.

The various example methods, devices, nodes and systems described herein are described in the general context of method steps or processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc. that perform specified tasks or implement specific abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

Although features have been shown and described, it will be understood that they are not intended to limit the claimed invention, and it will be made obvious to those skilled in the art that various changes and modifications may be made without departing from the spirit and scope of the claimed invention. The specification and drawings are, accordingly to be regarded in an illustrative rather than restrictive sense. The claimed invention is intended to cover all alternatives, modifications, and equivalents.

## Claims

1. A method, performed at a battery module, of connecting a main device (4) to a server (8) via a battery module (2) for powering the main device (4), the battery module (2) comprising a processing unit (10), a memory (11), a first interface (16) for communicating with a wireless network (18), and a second interface (20) for establishing a data transfer connection to the main device (4), the method comprising:
establishing a wireless network connection (6) to the server (8) by means of the first interface (16);
identifying the battery module (2) to the server (8) using the wireless network connection (6);
establishing a data transfer connection to the main device (4) by means of the second interface (20);
receiving an identifier of the main device (4) using the data transfer connection;
identifying the main device (4) to the server (8) using the wireless network connection (6); and
receiving sensor data configuration for the main device (4) from the server (8).

2. The method of claim 1, comprising receiving battery supply configuration data for the main device (4) from the server (8).

3. The method according to any of the preceding claims, wherein the battery module (2) further comprises a secure entity (26) and wherein identifying the battery module (2) to the server (8) comprises performing a secure authentication using the secure entity (26) of the battery module (2).

4. The method according to any of the preceding claims, wherein the main device (4) comprises a secure entity (27) and wherein receiving an identifier of the main device (4) comprises performing a secure authentication using the secure entity (27) of the main device (4).

5. The method according to claim 2, comprising supplying, by the battery module (2), power to the main device (4) according to the received battery supply configuration data to operate the main device (4).

6. The method according to any of claims 2 or 5, comprising:
supplying, by the battery module (2) and upon attachment of the battery module (2) to the main device (4) and/or upon start-up of the main device (4), power to the main device (4) according to a default battery supply configuration to establish the data transfer connection and to receive an identifier of the main device (4); and
supplying, by the battery module (2) and after receiving battery supply configuration data for the main device (4), power to the main device (4) according to the received battery supply configuration data to operate the main device (4).

7. The method according to any of the preceding claims, comprising transmitting sensor data from one or more sensors (22) of the battery module (2) and/or one or more sensors (23) of the main device (4) to the server (8)

8. The method according to claim 7, comprising receiving and storing sensor data from the one or more sensors (22) of the battery module (2) and/or one or more sensors (23) of the main device (4) prior to transmitting the sensor data to the server (8).

9. The method according to any of the preceding claims wherein, when no wireless network connection (6) to the server (8) can be established, an offline mode operation of the battery module (2) comprises:
determining if an offline power token is stored in the memory (11);
if an offline power token is stored in the memory (11), then supplying power to the main device (4) to operate the main device (4); and
if no offline power token is stored in the memory (11), then supplying no power to the main device (4).

10. A method, performed by a server (8), of managing data related to a main device (4) and a battery module (2) for powering the main device (4), the server (8) comprising a memory (31) holding battery supply configuration data and sensor data configuration associated with battery module (2) and/or the main device (4) and configured to connect to the battery module (2) via a wireless network (18), the method comprising:
establishing a wireless network connection (6) to the battery module (2);
receiving an identifier of the battery module (2) using the wireless network connection (6);
receiving an identifier of the main device (4) to be powered by the battery module (2) using the wireless network connection (6); and
transmitting the battery supply configuration data for the main device (4) and/or the sensor data configuration associated with battery module (2) and/or the main device (4) to the battery module (2) using the wireless network connection (6).

11. The method according to claim 10, comprising providing access to stored data related to the battery module (2) and/or the main device (4) to a mobile device (9) via the wireless network (18).

12. The method according to claim 11, comprising:
receiving changes to the battery supply configuration data associated with the main device (4) from the mobile device (9); and
sending the changed battery supply configuration data associated with the main device (4) to the battery module (2) using the wireless network connection (6).

13. A battery module (2) for powering a main device (4), comprising
a battery pack (12) for storing electrical energy and having a contact (14) for supplying power to the main device (4);
a processing unit (10) and a memory (11);
a first interface (16) for communicating with a wireless network (18); and
a second interface (20) for establishing a data transfer connection to the main device (4);
wherein the processing unit (10) is configured to perform any of the methods according to any of claims 1-9.

14. A server (8) comprising a processing unit (30), a memory (31), an interface unit (32) configured to connect to a wireless network (18), wherein the server (8) is configured to perform any of the methods according to any of claims 10-12.

15. A system (34) comprising:
the battery module (2) according to claim 13;
a main device (4) comprising a contact (15) for receiving power from the battery pack (12) and a third interface (21) for establishing a data transfer connection to the battery module (2); and
a server (8) according to claim 14.
